Europäisches Patentamt

(19) European Patent Office

Office européen des brevets

(11) Numéro de publication: **0 233 111**
**B1**

(12) **FASCICULE DE BREVET EUROPEEN**

(45) Date de publication du fascicule du brevet: **20.06.90**

(51) Int. Cl.⁵: **B 65 G 1/137**

(21) Numéro de dépôt: **87400164.7**

(22) Date de dépôt: **23.01.87**

(54) Installation automatique de conditionnement.

(30) Priorité: **28.01.86 FR 8601462**

(43) Date de publication de la demande:
**19.08.87 Bulletin 87/34**

(45) Mention de la délivrance du brevet:
**20.06.90 Bulletin 90/25**

(84) Etats contractants désignés:
**BE CH DE ES GB IT LI LU NL**

(56) Documents cités:
**EP-A-0 048 832**
**EP-A-0 082 327**
**AU-B- 64 840**

**FÖRDERN UND HEBEN, vol. 21, no. 11, aou7t 1971, pages 661-665, Krausskopf Verlag für Wirtschaft GmbH Mainz, DE; H. VISCHER: "Kommissioniersysteme für Hochraumlager"**

(73) Titulaire: **GASPARD FOURNITURES DE BUREAU, Société Anonyme rue Alphonse Terroir F-59770 Marly (FR)**

(72) Inventeur: **Gaspard, Georges 98,rue d'Estreux F-59264 Onnaing (FR)**

(74) Mandataire: **Lepage, Jean-Pierre Cabinet Lemoine & Associés 12, Boulevard de la Liberté F-59800 Lille (FR)**

## Description

L'invention est relative à une installation automatique de conditionnement destinée dans le domaine de la distribution à regrouper et emballer les commandes des clients à partir d'un magasin de stockage. Elle trouvera notamment son application chez les grossistes pour l'approvisionnement des clients de l'entreprise.

Dans le passé, l'approvisionnement des clients par les sociétés de gros était réalisé de façon décentralisée à partir de magasins de stockage dispersés sur le territoire. L'intérêt d'une telle disposition était marqué à une époque où les outils de gestion étaient peu performants Bon nombre d'opérations étaient réalisées manuellement avec une comptabilité sur papier. Un stock de petite dimension est plus facile à gérer et de plus, des facilités de transport étaient offertes en raison du rapprochement géographique du lieu de stockage décentralisé vis-à-vis du client à approvisionner.

Toutefois, au niveau du groupe, les inconvénients apportés par la décentralisation des stocks sont évidents. La pluralité des lieux de stockage fait qu'il est créé un stock global très important et coûteux.

De plus, de nombreux moyens techniques sont dupliqués, la rotation des stocks est lente et enfin un personnel important est nécessaire.

L'automatisation des installations de conditionnement n'a jamais été réalisée jusqu'à présent car les centres de distribution n'étaient pas suffisamment importants pour rentabiliser un tel investissement.

Avec les perfectionnements apportés aux systèmes informatiques, il est clairement apparu la nécessité de regrouper les centres de distribution de gros pour abaisser très sensiblement les frais de fonctionnement.

Pour accroître les performances dans le domaine de la distribution, il a été créé des magasins dans lesquels le conditionnement des articles à expédier est assisté par ordinateur.

Dans ces magasins, les articles sont rangés dans des étagères qui forment des allées. Un emballage, dans lequel doivent être regroupés les articles correspondant à une commande, est mis en circulation dans le magasin et passe dans les différentes allées pour être rempli par des moyens de préhension ou des opérateurs spécialisés.

Les moyens utilisés pour mettre en mouvement l'emballage dans lequel sont regroupés et conditionnés les articles correspondant à une commande, se présentent généralement sous la forme d'un convoyeur à bande sans fin ou à rouleaux.

La vitesse de circulation des emballages de conditionnement des articles doit nécessairement être faible car de nombreux arrêts de la chaîne doivent être marqués pour permettre le remplissage des emballages. Il s'agit là d'un des points importants car la chaîne entière doit être arrêtée pour permettre le remplissage d'un seul carton de conditionnement. Une disposition appropriée des lieux de stockage des articles permet de réduire ce phénomène de bouchon, toutefois le rendement de la chaîne est faible.

Il s'agit là d'un des principaux inconvénients du système à chaîne continue qui limite fortement la capacité de l'installation.

En conclusion, sur le plan de la gestion des stocks, il est nécessaire de centraliser les produits dans un magasin unique puis de les distribuer chez les détaillants selon leurs commandes. Pour atteindre cet objectif, il est préférable de disposer d'une installation spécialisée de conditionnement, toutefois les installations existantes présentent des cadences de production que l'on peut juger comme faibles en raison de l'aspect continu des chaînes de convoyage. D'autre part, des problèmes subsistent au niveau du conditionnement personnalisé de certaines commandes qui sortent des tolérances standard habituellement utilisées.

Le but principal de la présente invention est de présenter une installation automatique de conditionnement qui soit adaptée à traiter l'emballage d'articles de nature et d'encombrement variant dans des proportions importantes, ceci avec une cadence de production élevée.

Généralement, il est difficile de concilier une rapidité d'emballage avec une grande variété d'objets rencontrés. En effet, pour s'adapter aux formes et dimensions des produits à emballer, il est nécessaire de disposer d'emballages de formats adaptés et cette diversité gêne l'automatisation des procédés de conditionnement qui requièrent une standardisation.

D'autres buts et avantages de la présente invention apparaîtront au cours de la description qui va suivre qui n'est cependant donnée qu'à titre indicatif et qui n'a pas pour but de la limiter.

L'installation automatique de conditionnement, destinée, dans le domaine de la distribution, à regrouper et emballer les commandes des clients à partir d'un stock, comprenant:

- un magasin de stockage présentant des allées bordées de rayonnages dans lesquels sont rangés des articles disponibles, de forme, de nature et de volume divers, pouvant notamment varier dans de fortes proportions,

- une chaîne continue de convoyage circulant dans les allées le long des rayonnages sur laquelle cheminent des cartons de conditionnement aptes à recevoir les articles d'une commande prélevés des rayonnages par du personnel ou des moyens de préhension,

- ladite chaîne aboutissant à un poste de fermeture des cartons suivi d'un quai d'expédition,

est caractérisée en ce que ledit magasin de stockage comporte au moins deux secteurs élémentaires dans lesquels sont répartis sélectivement lesdits articles en fonction de leur forme, nature et/ou volume, et en ce que lesdits secteurs élémentaires sont disposés successivement l'un à la suite de l'autre et présentent, au niveau de ladite chaîne de convoyage en sortie de secteur, des moyens pour modifier le cheminement et le parcours du ou des cartons de conditionnement afin que ledit cheminement des pièces collationnées se fasse soit en passant devant un seul secteur élémentaire, soit successivement devant plusieurs secteurs élémentaires en fonction des besoins des commandes pour permettre un traitement personnalisé pour chacun des cartons de conditionnement, au niveau du parcours et de l'emballage, aptes à autoriser une circulation des cartons de conditionnement limitée et éviter les phénomènes d'accumulation en un ou plusieurs points de la chaîne de convoyage.

L'invention sera mieux comprise à la lecture de la description suivante accompagnée de dessins en annexe, parmi lesquels:

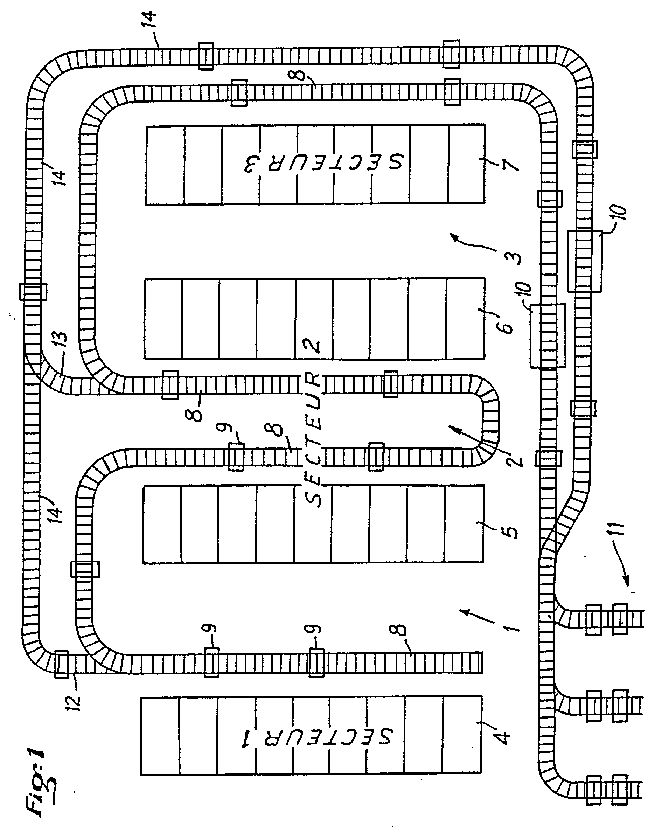

la figure 1 schématise le plan d'un magasin de stockage équipé d'une installation automatique de conditionnement selon la présente invention,

La présente invention vise une installation automatique de conditionnement qui trouvera tout particulièrement son application dans le domaine de la distribution, chez les grossistes pour assurer la livraison de leurs clients.

Alors que dans le passé, pour faciliter la gestion des stocks, on avait tendance à les éclater en les décentralisant, avec les moyens informatiques puissants dont on dispose aujourd'hui, il est apparu que cette décentralisation était coûteuse et inadaptée avec la mise en place d'installations automatiques.

En effet, la multiplication des lieux de stockage cause un accroissement global des stocks et donc, un surcout.

De plus, étant donné l'investissement que représente la mise en place d'installations automatisées, il est nécessaire de concentrer celles-ci en un lieu unique pour permettre l'amortissement rapide.

C'est dans cet esprit qu'a été développée la présente invention qui fonctionne avec un personnel réduit et une grande cadence de production.

Généralement, pour être performante, une installation automatique de conditionnement doit être spécialisée sur un genre d'articles déterminé, c'est-à-dire traiter des objets dont les poids et volumes varient dans des limites relativement faibles.

Dès lors qu'il s'agit de traiter des articles qui, de par leur nature, peuvent varier dans de très fortes proportions, alors la chaîne automatique de conditionnement perd une bonne partie de son efficacité. Par exemple, dans le domaine des fournitures pour bureau, lorsqu'il s'agit de livrer une commande portant sur des stylos ou crayons, il est évident que le temps de conditionnement sera différent par rapport à celui d'une commande portant sur du mobilier de bureau tel que fauteuils, armoires ou autres.

Dans les installations automatiques de conditionnement, généralement le regroupement des commandes est effectué en série sur une chaîne continue de convoyage et donc, la cadence de conditionnement est limitée par la livraison d'articles pesants et volumineux qui freinent la chaîne.

Par ailleurs, il est également difficile d'adapter un mode d'emballage standard lorsque celui-ci concerne des commandes dont le volume varie dans de fortes proportions. Il est nécessaire alors de faire appel à des emballages personnalisés qui freinent également la cadence.

La présente invention a précisément été développée pour répondre aux exigences précédentes c'est-à-dire une grande capacité de production tout en concernant des articles dont le volume et le poids varient dans de grandes proportions.

La figure 1 schématise le plan d'un magasin de stockage équipé d'une installation automatique de conditionnement selon la présente invention. Ce magasin de stockage comprend des allées (1), (2) et (3) bordées de rayonnages (4), (5), (6) et (7) où sont rangés les articles disponibles.

Ces rayonnages peuvent, par exemple, être formés de casiers où sont placées les boîtes des différents produits livrés par les fournisseurs.

De préférence, on utilise un stockage dynamique des articles, c'est-à-dire que les rayonnages sont formés de chemins de roulement inclinés. Ainsi, toute boîte placée dans un rayonnage, glisse par gravité sur le bord du rayonnage et peut facilement être appréhendée. Les avantages du stockage dynamique sont nombreux, en particulier, la rotation des stocks se fait en prélevant toujours le plus ancien article stocké et les rayonnages ne prennent pas la poussière, de plus ils sont faciles à utiliser car les produits disponibles sont toujours bien présentés sur le bord du rayonnage.

Une chaîne (B) continue de convoyage circule dans les allées (1), (2) et (3) et permet le transport des cartons (9) de conditionnement. De préférence, il s'agit d'une chaîne de convoyage formée d'un train de rouleaux, motorisés ou non.

Les cartons (9) de conditionnement servent à regrouper les articles d'une même commande. Ces cartons (9) glissent sur la chaîne qui circule dans les allées le long des rayonnages de façon à ce que du personnel ou des moyens de préhension puissent prélever les articles dans les rayonnages et les placer dans les cartons de conditionnement.

Il est par exemple possible d'envisager que chacun des cartons porte la liste des articles faisant l'objet de la commande considérée et le personnel se charge de remplir au fur et à mesure le carton lorsque celui-ci passe en face du rayonnage où est stocké l'article commandé.

La chaîne continue de convoyage (B) aboutit à un poste de fermeture des cartons (10), ce qui permet de terminer l'emballage des articles commandés et ce poste de fermeture (10) est suivi d'un quai (11) d'expédition.

Le schéma de l'installation de conditionnement automatique présentée précédemment correspond aux techniques traditionnelles utilisées dans les magasins de stockage. Comme on peut le voir, la vitesse de circulation des cartons (9) sur la chaîne (8) est nécessairement limitée afin de ne créer aucun bouchon. Si par exemple un article lourd et volumineux doit être livré et que son temps de chargement dans un carton est important, il est nécessaire que la chaîne de convoyage s'arrête durant le temps de cette opération.

Par ailleurs, le poste de fermeture (10) des emballages doit faire face à toutes sortes de configurations et il est difficile d'automatiser entièrement la fermeture des cartons dans ces conditions.

Selon la caractéristique principale de la présente invention, l'installation automatique de conditionnement présente des moyens de traitement personnalisés pour chacun des conditionnements au niveau du parcours et de l'emballage.

Cette technique, en association avec une gestion rationnelle des stocks, permet d'accroître considérablement le rendement de l'installation.

Les moyens de traitement se présentent sous la forme d'une sectorisation du magasin de stockage Dans l'exemple choisi, cette sectorisation se décompose en un secteur (1) formé des étagères (4), en un secteur (2) formé des étagères (5) et (6), et d'un secteur (3) formé des étagères (7).

Chacun de ces secteurs est doté d'une voie de dégagement, à la figure 1 le secteur (1) est muni d'une voie de dégagement (12) et le secteur (2) est muni d'une voie de dégagement (13), qui permettent de diriger directement en sortie de secteur le carton d'emballage vers le poste de fermeture (10) et d'expédition (11).

Dans la pratique, chaque allée forme un secteur et un aiguillage est placé en bout de chaque allée pour diriger les cartons d'emballage tantôt vers le secteur suivant, tantôt vers la voie de dégagement (14) parallèle, qui mène directement aux postes d'emballage (10) et d'expédition (11).

Cette possibilité d'acheminer directement les cartons d'emballage vers le poste de fermeture (10) permet de désengorger notablement l'installation de conditionnement et donc d'accroître ses capacités de production.

Bien entendu, la sectorisation du magasin de stockage doit être menée parallèlement à une disposition rationnelle et appropriée du stockage. En adoptant la disposition de la figure 1, c'est-à-dire une décomposition du magasin de stockage en trois secteurs, il est souhaitable que le secteur (1) puisse satisfaire 20% des commandes, le secteur (2) 60% des commandes et enfin le secteur (3) 20% des commandes. Avec de telles proportions, il est possible de travailler à la continue sans enregistrer un phénomène d'accumulation des cartons en un point de la chaîne.

Le secteur (1) concerne les articles les plus courants alors qu'au contraire, le secteur (3) concerne les articles volumineux et encombrants, qui demandent un temps relativement important pour être mis en place dans les cartons de conditionnement.

Les moyens de traitement personnalisés se concrétisent également sous la forme de l'utilisation de cartons de différents formats standards dont chacun de ces formats est réductible pour s'adapter au volume des articles contenus à l'intérieur.

## Revendications

1. Installation automatique de conditionnement, destinée, dans le domaine de la distribution, à regrouper et emballer les commandes des clients à partir d'un stock, comprenant:

un magssin de stockage présentant des allées (1-3) bordées de rayonnages (4-7) dans lesquels sont rangés des articles disponibles, de forme, de nature et de volume divers, pouvant notamment varier dans de fortes proportions,

une chaîne continue de convoyage (8) circulant dans les allées (1-3) le long des rayonnages (4-7) sur laquelle cheminent des cartons de conditionnement (9) aptes à recevoir les articles d'une commande prélevés des rayonnages (4-7) par du personnel ou des moyens de préhension,

ladite chaîne (8) aboutissant à un poste de fermeture des cartons (10) suivi d'un quai d'expédition (11), caractérisée en ce que ledit magasin de stockage comporte au moins deux secteurs (4; 5, 6; 7) élémentaires dans lesquels sont répartis sélectivement lesdits articles en fonction de leur forme, nature et/ou volume, et qui sont disposés successivement l'un à la suite de l'autre et présentent, au niveau de ladite chaîne de convoyage (8) en sortie de secteur, des moyens pour modifier le cheminement et le parcours du ou des cartons de conditionnement (9) afin que ledit cheminement des pièces collationnées se fasse soit en passant devant un seul secteur élémentaire, soit successivement devant plusieurs secteurs élémentaires en fonction des besoins des commandes pour permettre un traitement personnalisé pour chacun des cartons de conditionnement, au niveau du parcours et de l'emballage, aptes à autoriser une circulation des cartons de conditionnement limitée.

2. Installation automatique de conditionnement, selon la revendication 1, caractérisée par le fait que lesdits moyens pour modifier le cheminement et le parcours des cartons de conditionnement se présentent sous la forme d'au moins une voie de dégagement (12, 13, 14) rapide du carton de conditionnement (9) vers le poste de fermeture (10) et d'expédition (11).

3. Installation automatique de conditionnement, selon la revendication 2, caractérisée par le fait qu'elle comporte une voie de dégagement rapide (14) sur laquelle viennent se connecter les différentes voies de dégagement (12, 13) de chacun desdits secteurs.

4. Installation automatique de conditionnement, selon la revendication 3, caractérisée par le fait que chaque secteur (4, 5 ou 6; 7) est formé par une allée (1; 2; 3) bordée au moins d'un rayonnage (4; 5 ou 6; 7) et qu'un aiguillage est placé en bout de chaque allée (1; 2; 3) pour diriger les cartons (9) de conditionnement tantôt vers la voie de dégagement rapide (14), tantôt vers le secteur élémentaire suivant.

5. Installation automatique de conditionnement, selon la revendication 4, caractérisée par le fait qu'elle comporte trois secteurs élémentaires successifs aptes à regrouper lesdits articles à collationner tels que le premier secteur (1) satisfasse 20% des commandes, le deuxième secteur (2) satisfasse 60% des commandes, le troisième secteur (3) satisfasse 20% des commandes.

## Patentansprüche

1. Automatische Verpackungsanlage, die im Distributionsbereich dazu bestimmt ist, die Aufträge der Kunden ab einem Vorrat zu gruppieren und zu verpacken, umfassend:

ein Vorratslager, das Gänge (1-3) aufweist, entlang denen Warengestelle (4-7) aufgestellt sind, in denen verfügbare Artikel verschiedener Form, Art und verschiedenes Volums, welche zwar in großen Maßen variieren können, angeordnet sind,

ein Stetigförderer (8), der in den Gängen (1-3) an den Warengestellen (4-7) vorbeigehend läuft, auf dem Verpackungskartons (9) gefördert werden, welche dafür geeignet sind, die vom Personal oder von Greifmitteln aus den Warengestellen (4-7) entnommenen Artikel eines Auftrags zu empfangen,

wobei der genannte Förderer (8) bis an eine Kartonschließungsstelle (10), wohinter sich eine Versandrampe (11) befindet, reicht,

dadurch gekennzeichnet, daß das genannte Vorratslager wenigstens aus zwei Elementarsektoren (4; 5, 6; 7) besteht, in denen die genannten Artikel je nach deren Form, Art und/oder Volum selektiv verteilt sind und die aufeinanderfolgend angeordnet sind und, im Bereich des genannten Förderers (8) am Ausgang des Sektors, Mittel aufweisen zur Änderung der Förderung und des Laufes des oder der Verpackungskartons (9), damit die genannte Förderung der entnommenen Artikel entweder an nur einem Elementarsektor oder nacheinander an verschiedenen Elementarsektoren vorbeigehend geschieht, je nach den Bedürfnissen der Aufträge, um eine individualisierte Behandlung jedes Verpackungskartons, im Bereich des Laufes und der Verpackung, zu erlauben, welche dafür geeignet sind, eine beschränkte Förderung der Verpackungskartons zu gestatten.

2. Automatische Verpackungsanlage nach Anspruch 1, dadurch gekennzeichnet, daß die genannten Mittel zur Änderung der Förderung und des Laufes der Verpackungskartons in der Form von wenigstens einer Bahn (12, 13, 14) zur schnellen Abfuhr des Verpackungskartons (9) zur Schließungs- (10) und Versandstelle (11) ist.

3. Automatische Verpackungsanlage nach Anspruch 2, dadurch gekennzeichnet, daß sie eine schnelle Abfuhrbahn (14) umfaßt, an die sich die verschiedenen Abfuhrbahnen (12, 13) jedes der genannten Sektoren anschließen.

4. Automatische Verpackungsanlage nach Anspruch 3, dadurch gekennzeichnet, daß jeder Sektor (4; 5 oder 6; 7) aus einem Gang (1; 2; 3) besteht, entlang dem wenigstens ein Warengestell (4; 5 oder 6; 7) aufgestellt ist und daß ein Schaltwerk am Ende jedes Ganges (1; 2; 3) angeordnet ist um die Verpackungskartons (9) bald zur schnellen Abfuhrbahn (14), bald zum nächsten Elementarsektor zu leiten.

5. Automatische Verpackungsanlage nach Anspruch 4, dadurch gekennzeichnet, daß sie drei aufeinanderfolgende Elementarsektoren umfaßt, welche dafür geeignet sind, die genannten zu entnehmenden Artikel so zu gruppieren, daß der erste Sektor (1) 20% der Aufträge entspricht, der zweite Sektor (2) 60% der Aufträge entspricht, der dritte Sektor (3) 20% der Aufträge entspricht.

## Claims

1. Automatic packaging installation designed, in the field of distribution, to group together and pack clients' orders from a stock, comprising:

a warehouse having aisles (1-3) bordered by sets of shelves (4-7) in which are placed available items of various shapes, types and sizes liable, in particular, to vary in substantial proportions,

a continuous conveyor chain (8) moving through the aisles (1-3) along the sets of shelves (4-7) and on which travel packaging boxes (9) suitable for receiving the items of an order taken from the sets of shelves (4-7) by personnel or gripping means,

the said chain (8) terminating at a box closing station (10) followed by a despatch platform (11),

characterized in that the said warehouse comprises at least two basic areas (4; 5, 6; 7) in which the said items are selectively distributed according to their shape, type and/or volume and which are arranged in succession one after another and are provided, at the said conveyor chain (8) at the exit from the area, with means for modifying the routing and the path of the packaging box or boxes (9) so that the said routing of the articles collated should take place either upon passing a single basic area or several basic areas successively according to the requirements of the order to permit personalized treatment for each of the packaging boxes, with regard to path and packing, suitable for allowing limited circulation of the packaging boxes.

2. Automatic packaging installation according to claim 1, characterized by the fact that the said means for modifying the routing and path of the packaging boxes take the form of at least one fast alternative route (12, 13, 14) for the packaging box (9) towards the closing station (10) and the despatch platform (11).

3. Automatic packaging installation according to claim 2, characterized in that it comprises a fast alternative route (14) with which the different alternative routes (12, 13) of each of the said different areas link up.

4. Automatic packaging installation according to claim 3, characterized by the fact that each area (4; 5 or 6; 7) is formed by an aisle (1; 2; 3) bordered at least by one set of shelves (4; 5 or 6; 7) and that a shunting means is placed at the end of each aisle (1; 2; 3) to route the packaging boxes (9) at times towards the fast alternative route (14), and at times towards the following basic area.

5. Automatic packaging installation according to claim 4, characterized by the fact that it comprises three successive basic areas suitable for grouping together the said items to be collated in such a way that the first area (1) meets 20% of the orders, that the second area meets 60% of the orders and that the third area meets 20% of the orders.

Fig.1